# EUROPEAN PATENT SPECIFICATION

(11) **EP 3 097 366 B1**
(45) Date of publication and mention of the grant of the patent: **01.04.2020**
(21) Application number: 15702855.6
(22) Date of filing: 05.01.2015
(51) Int. Cl.: F24H 1/32, F24H 1/44, F24H 1/46, F28F 7/02, F28D 7/16, F24H 8/00

(54) **MODULAR FIRED HEAT EXCHANGER**
GLIEDERHEIZKESSEL
CHAUDIÈRE SECTIONNABLE

(30) Priority: 22.01.2014 PL 40690214
(43) Date of publication of application: 30.11.2016
(73) Proprietor: AIC Spólka Akcyjna, 81-577 Gdynia (PL)
(72) Inventor: SIEMIENCZUK, Tomasz, PL-80-351 Gdansk (PL); PACHOLSKI, Adam, PL-81-603 Gdynia (PL); TOMICKI, Ariel, PL-80-180 Kowale (PL)
(74) Representative: Pomianek, Grazyna
(86) International application number: PCT/PL2015/000002
(87) International publication number: WO 2015/112032

(56) References cited:
- EP-A2- 1 862 747
- EP-A2- 1 912 027
- DE-A1-102007 039 853

## Description

The invention concerns a modular fired heat exchanger and the module of the fired heat exchanger designated for industrial boiler water heating installations.

Known from publication WO 2013/092601 A2 is a modular heat exchanger which contains at least two heat exchanger modules placed side by side and a connecting plate, where each of the modules is fitted with an appropriate fluid duct, as well as inlet and outlet openings which are directed towards the connecting plate, where the connecting plate features at least one connecting duct which serves as a hydraulic connection between the two fluid ducts in the heat exchanger modules, where the heat exchanger modules placed side by side and the connecting plate are positioned radially around the combustion chamber, and where the heat exchanger modules contact the combustion chamber.

Publication AU 2012200237 discloses a modular heat exchanger highly flexible in use, comprising a box-like body which delimits inside it at least one heat exchange chamber, and has at least one inlet and at least one outlet for the passage through the heat exchange chamber of combustion products along a preferred path. More specifically, the box-like body defines at least partially in its side walls at least one duct for feeding a fluid to be heated and inside the heat exchange chamber heat exchange elements are provided and are associated with the supply duct in order to increase the thermal efficiency.

Preferably, each modular element of the heat exchanger contains at least one section with heat exchange elements, at least one section of the supply duct, and at least one section of the heat exchange chamber so at to attain a heat exchanger of varied preset dimensions and technical parameters.

Known from publication WO 2010/025960 A2 is a modular structure of the heat exchanger, particularly designated for working at high loads and/ or in high temperatures. The structure contains an external jacket and a number of heat exchanger modules, each being either a heater, a steamer, or an overheat protection module, where each module contains an inlet collector and an outlet collector, and a coil of pipes through which the endothermic agent, water in particular, flows from the inlet collector to the outlet collector, and where all heat exchanger modules are fitted inside one and the same casing so that the same egzothermic carrier flows around the modules, where in the case of a steamer the modules are connected parallel with a steam drum.

Known too from publication WO 2008/004855 A2 is a modular heat exchanger and the method of manufacturing it. The heat exchanger consists of interconnected repeatable members, where each member contains a burner chamber with free space for fitting the burner, a combustion gas inlet and outlet, and a water flow duct having both inlet and outlet. The members are mutually positioned so that they form a common burner chamber, and the gas and water inlets and outlets in different members are appropriately interconnected to ducts.

Known from publication EP 1 862 747 A2 is a heat exchanger, especially for heating hot water from a burner's hot gases, is a multi-part body of casting segments within the water. A combustion chamber suitable for for a gas or oil burner and a water zone has inflow and outflow connections. The casting also has a hot gas flow channel and an exhaust gas outlet. Removable heat exchange elements are integrated into the casting, partially immersed in the water forming part of the water zone wall.

Document DE 10 2007 039853 A1 discloses a boiler according to the preamble of independent claim 1, which has circular boiler members forming a combustion chamber with surrounding heating gas flues. An inflow opening is formed on each boiler member in a lower region of the heating gas flues, where the inflow opening is provided for heating gas in a modular-like calorific value-heat exchanger that is arranged in a retainer. The return water partially flows into an inner water chamber by a water base that is arranged between the inner water chamber and an outer water chamber in a lower region of one of the boiler members.

Document EP 1 912 027 A2 discloses a sectional boiler which has a combustion chamber provided with connection possibility for a gas or oil fan burner. An ancillary heating surface is provided for the condensation of the exhaust gas moisture. The combustion chamber has a longitudinal axis that runs horizontally. The ancillary heating surface is integrated inside a vertical boiler unit, where a heating gas flows through the ancillary heating surface from bottom to top. The ancillary heating surface is integrally cast and is provided with a corrosion-resistant coating.

A fired heat exchanger module according to the present invention is defined in claim 1. It comprises at least one set of heat exchange elements, at least one water inlet stub pipe, and at least one water outlet stub pipe, and at its top there is a segment of the combustion chamber encased in a segment of the water jacket fitted with at least one fluid outlet stub pipe, where connected to a bottom of the segment of the combustion chamber is at least one set of the elements for the exchange of heat between the combustion gases and the water, at the bottom fitted with at least one water inlet stub pipe, where the chamber through which the water flows in each set of the heat exchange elements is connected to the segment of the water jacket, and the segment of the combustion chamber is in the shape of a cylindrical dome featuring openings for said set(s) in the bottom wherein the segment of the water jacket bottom of the segment of the combustion chamber is made up of planes where two upper planes forming the bottom of the segment of the combustion chamber are positioned at an angle to each other and inclined down towards the centre of the lower plane of said segment of the water jacket.

The segment of the water jacket may be closed with a wall at least on one side of the segment of the combustion chamber.

Preferably, the connection between the segment of the combustion chamber and the set(s) is detachable.

In order to increase the heat exchange area, strengthen the structure, and agitate the water flowing through, there are hollow-like indentations on the water jacket segment of the segment of the combustion chamber. Preferably, the module features a casing for the set(s) with an opening(s) for inserting the set(s) inside, where the casing is connected to the water jacket segment of the segment of the combustion chamber, the latter preferably integrally connected to the casing.

Preferably, the tubes which supply and collect the water to/from the module are detachably connected to the relevant inlet and outlet stub pipes with a linking element featuring a collar for supporting the tubes(s).

Every single module may serve as a heat exchanger, where the segment of the combustion chamber and the segment of the water jacket are closed with a wall on the one side, and a wall with an opening for the burner on the other side, in which way a combustion chamber is formed; the module further fitted with a duct discharging the combustion gases into the a vent, and with a condensate accumulation bowl.

The structure of the heat exchanger module allows for interconnecting any number of the modules other, depending on the desired efficiency of the heat exchanger, while using a single burner. No particular precision is required while connecting the heat exchanger modules. Should a higher efficiency of the heat exchanger be required, it is possible to expand it with subsequent modules, or connect the modules in different configurations. The connection of the tubes which supply fluid to the modules to the main common inlet stub pipe, and connection of the tubes which collect the water from the modules to the main common outlet stub pipe ensures savings of the consumables.

The invention is illustrated on the exemplary drawings, where
Fig.1 shows the heat exchanger module with two sets of heat exchange elements in an axonometric projection,
Fig.2 - elements of the heat exchanger module presented on Fig. 1, in an axonometric projection,
Fig.3 - a section of the heat exchanger module fitted with a casing designated for two sets of heat exchange elements with one set in place, in an axonometric projection,
Fig.4 - a segment of the combustion chamber fitted with the casing designated for two sets, in an axonometric projection,
Fig.5 - a section of a segment of the combustion chamber with hollow-like indentations in the water jacket and centrally-inclined bottom of the water jacket, in an axonometric projection,
Fig. 6 - a cross-section of the segment of the combustion chamber, as shown on Fig. 5,
Fig.7 - the heat exchanger module with one set of heat exchange elements, in an axonometric projection,
Fig.8 - a cross-section of the heat exchanger module, as shown on Fig.7, in an axonometric projection,
Fig.9 - the connection of the supply tube with the water outlet stub pipe, in an axonometric projection,
Fig.10 -a cross-section of a section of the water jacket of a segment of the combustion chamber, showing the connection between the outlet stub pipe and the collection tube,
Fig.11 - the connection between the water outlet stub pipe and the water collection tube, in an axonometric projection,
Fig.12 - bi-modular heat exchanger, in and axonometric projection,
Fig.13 - tri-modular heat exchanger, in and axonometric projection, Fig.14 - the connection between the upper segments of the heat exchanger modules in the tri-modular heat exchanger, in an axonometric projection,
Fig.15 - a section of the combustion chamber in the tri-modular heat exchanger, in an axonometric projection,
Fig.16 - the connection between the water outlet stub pipes and the fluid collection tubes, in an axonometric projection.

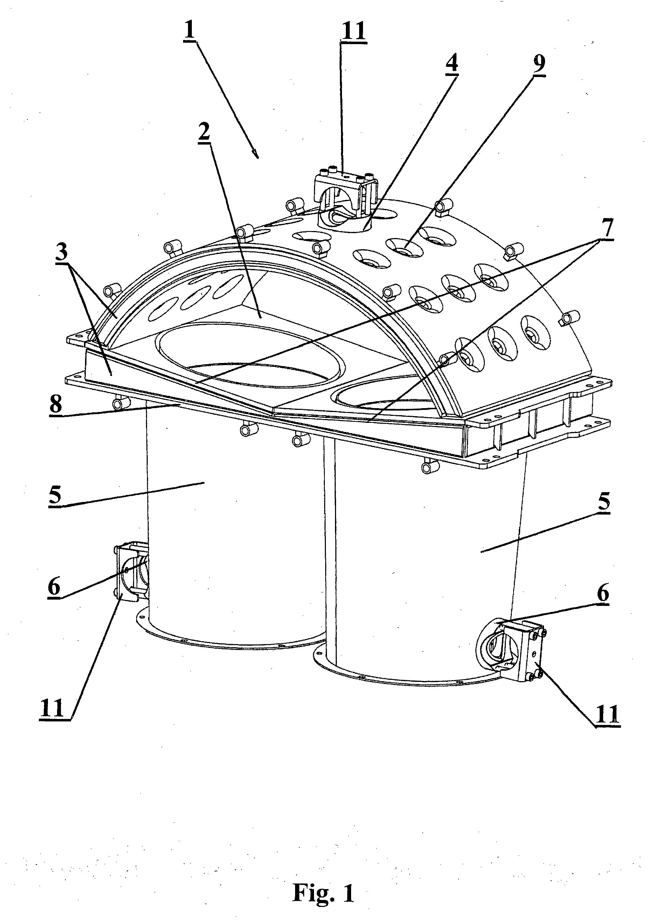

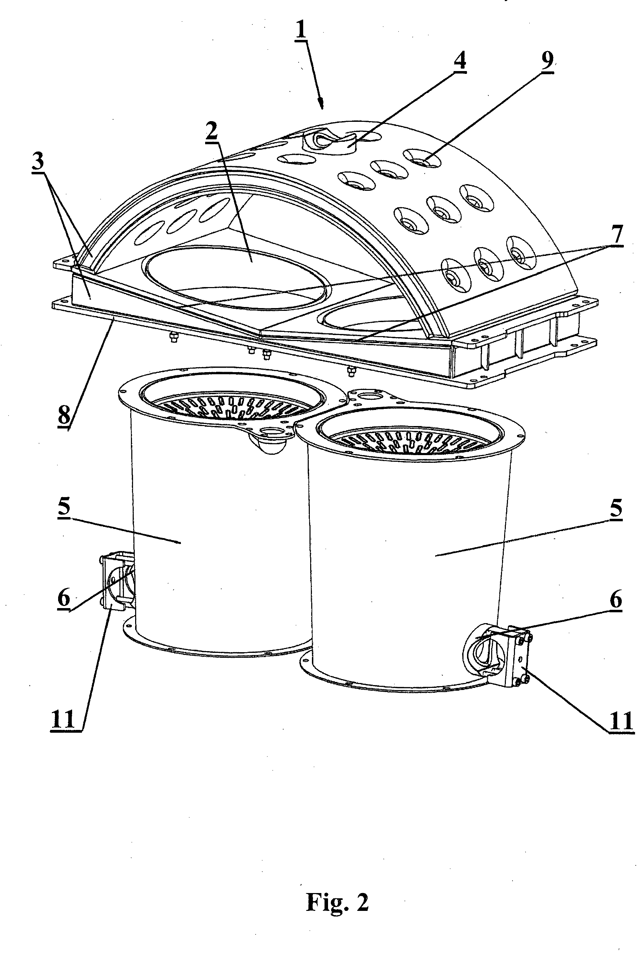

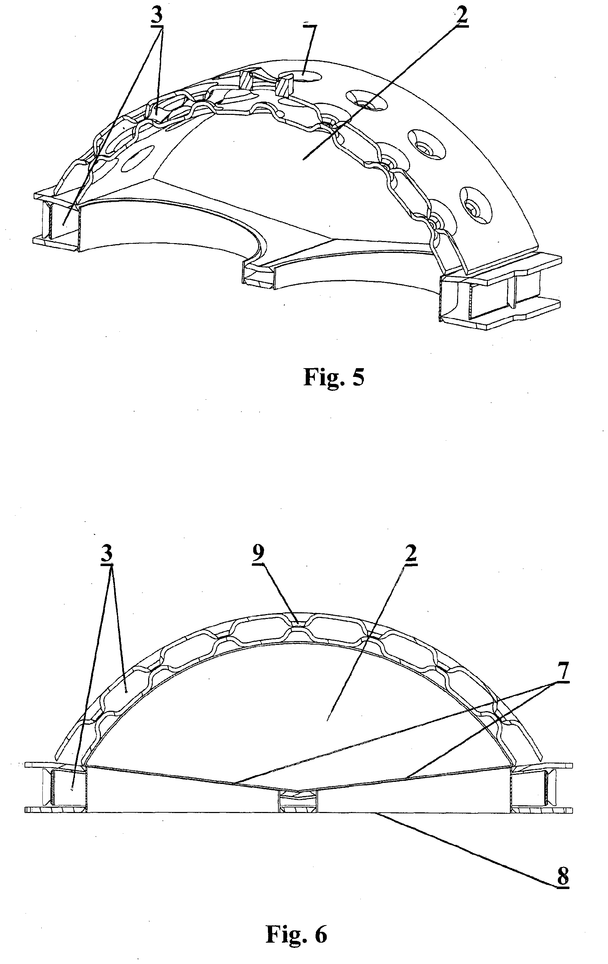

The invention will now be described by way of example and with reference to the accompanying drawings in which:
In the first embodiment shown on Figures 1 and 2 the module of the fired heat exchanger contains two sets of the elements exchanging heat between the combustion gases and the water. In the top section module has a segment of the combustion chamber 2 in the shape of a cylindrical dome featuring openings for sets 5 in the bottom, where the combustion chamber is open on both sides and encased in a water jacket 3, which on the top is fitted with the water outlet stub pipe 4. The openings in the bottom of the segment of the combustion chamber 2 are used to screw on two sets 5 of the elements which exchange heat between the combustion gases and the water, connected to the segment of the combustion chamber 2, where each of those elements is fitted with the water inlet stub pipe 6 at the bottom. The chamber through which the water flows inside the set 5 of the heat exchange elements is connected to the water jacket 3 of the segment of the combustion chamber. Water jacket 3 of the bottom of the segment of the combustion chamber 2 is formed into two flat planes: upper 7 and lower 8, one positioned at an angle to the other and inclined towards the centre. (Fig. 6). Such shape of the bottom of the water jacket substantially improves the strength parameters, prevents boiling of the water, and improves its flow. The hollow-like indentations 9 in the water jacket 3 of the segment of the combustion chamber 2 increase the heat exchange area (Fig. 1, Fig.2, Fig.5, Fig 6).

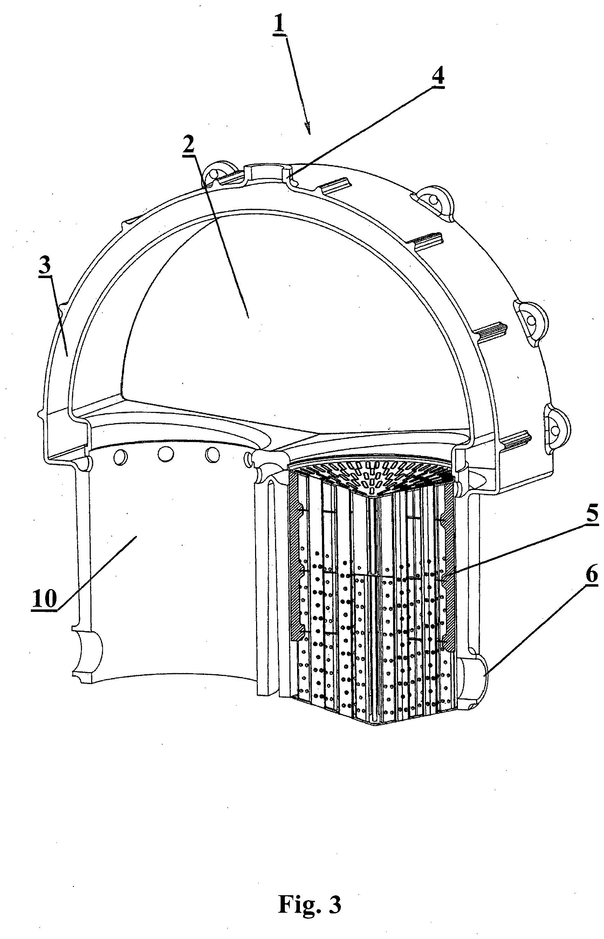

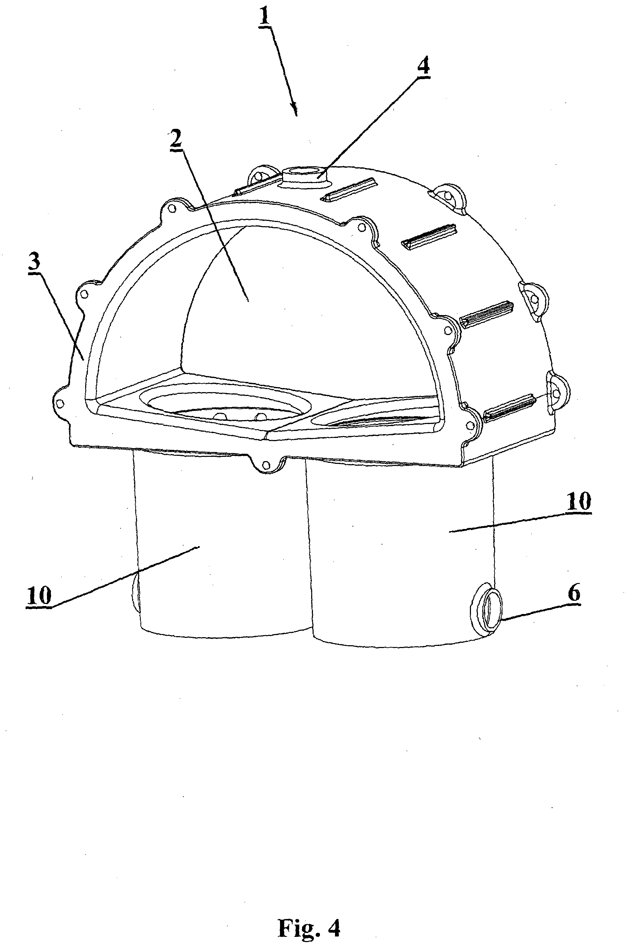

In the second embodiment of the invention the heat exchanger module described in example one is fitted with the casing 10 for sets 5, which is integrally connected to the wall of the water jacket 3 of the segment of the combustion chamber 2 (Fig. 3, Fig.4). On the bottom of the casing 10 there are openings through which sets 5 are inserted inside and then pushed into the corresponding openings in the bottom of the segment of the combustion chamber 2.

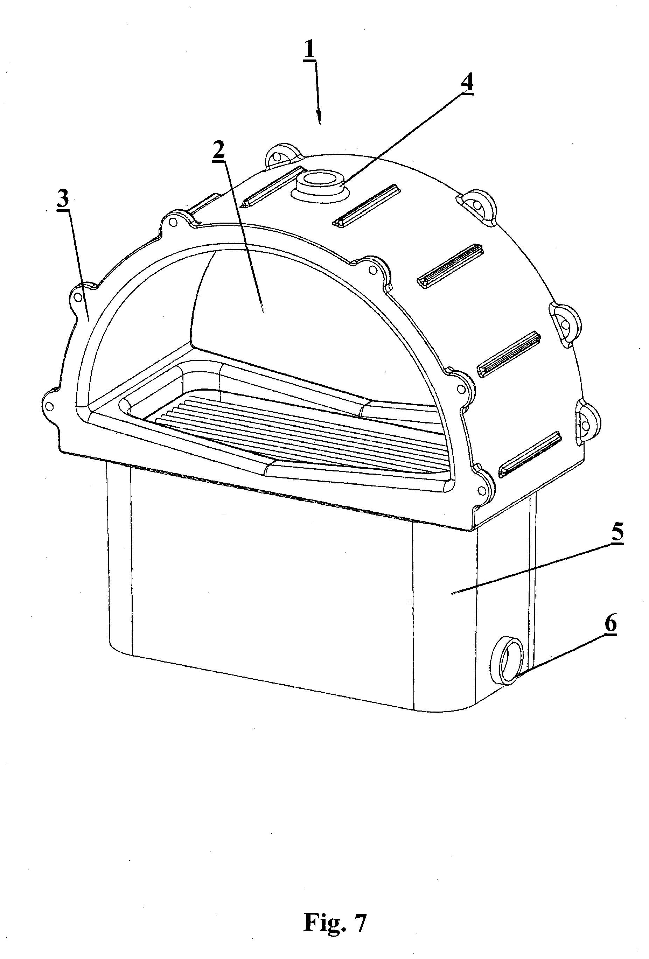

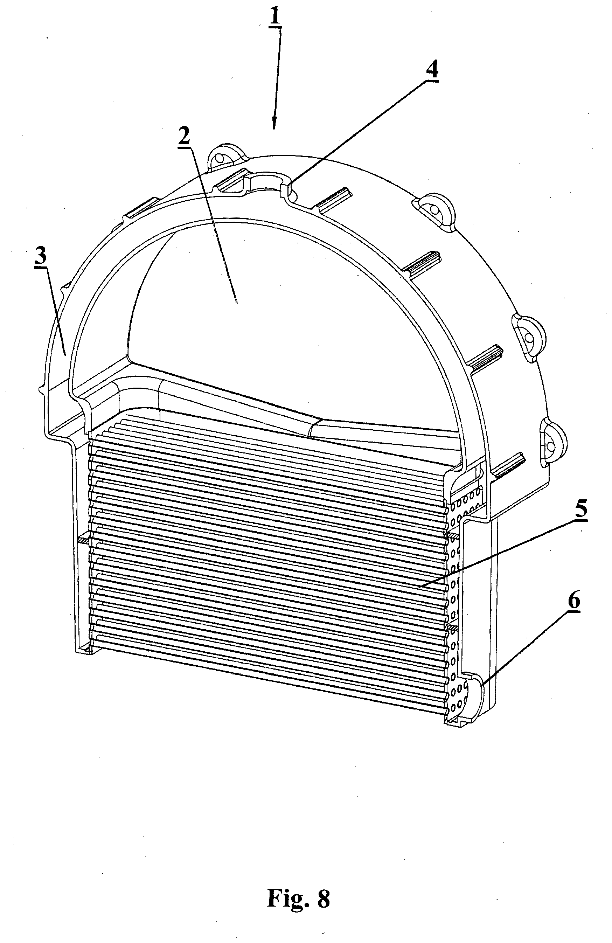

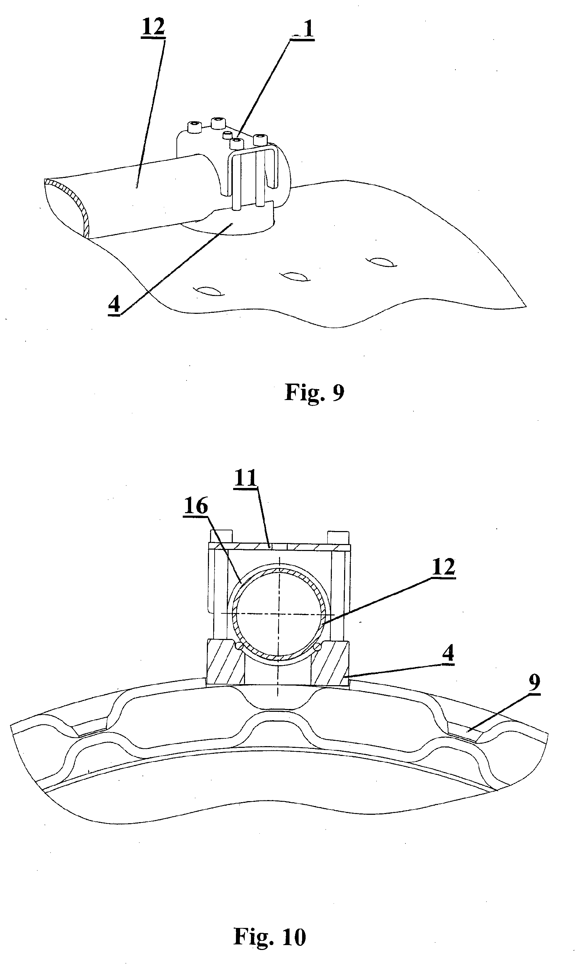

In example three, the module of the fired heat exchanger, as described above, has one set of heat exchange elements 5 instead of two, as shown on Fig. 7 and Fig. 8.
The tubes which supply 13 and collect 12 water to/from the module described above are detachably connected to the relevant inlet 6 and outlet 7 stub pipes with the linking element 11 with collar 16 for supporting the tubes 12, 13 (Figures 9 to 11).

In other embodiments of the invention the heat exchanger module as described in the examples above may serve as a heat exchanger. Then, a segment of the combustion chamber 2 is closed with a wall on the one side, and a wall featuring an opening for the burner on the other, in which way a combustion chamber is formed inside.

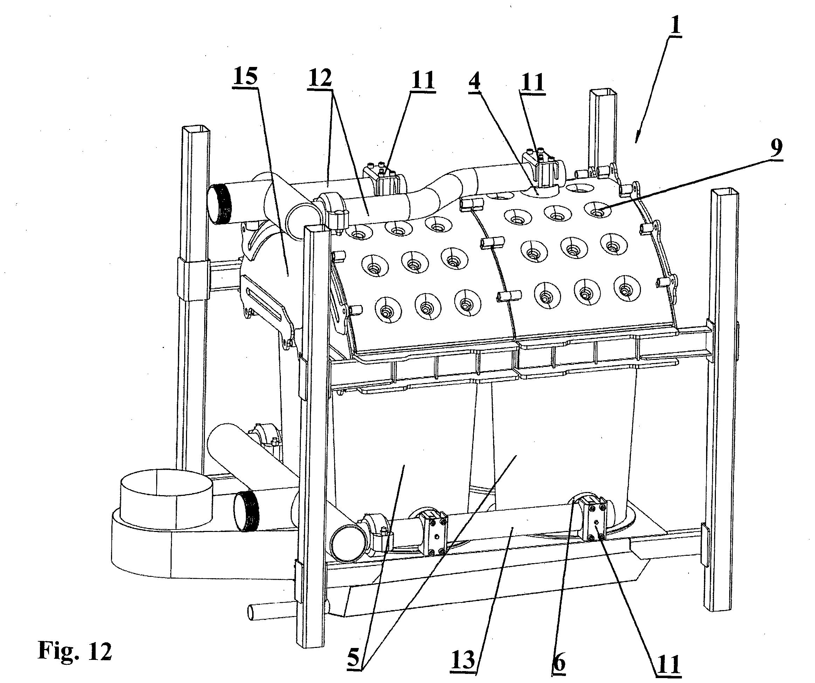

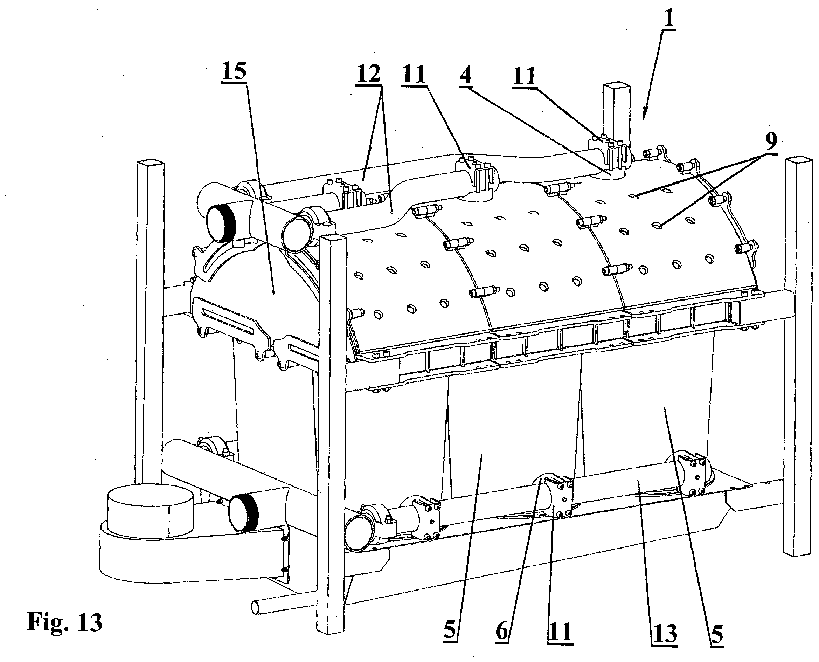

Fig. 12 shows the bi-modular version of the heat exchanger, and Fig. 13 depicts the heat exchanger in the tri-modular version.

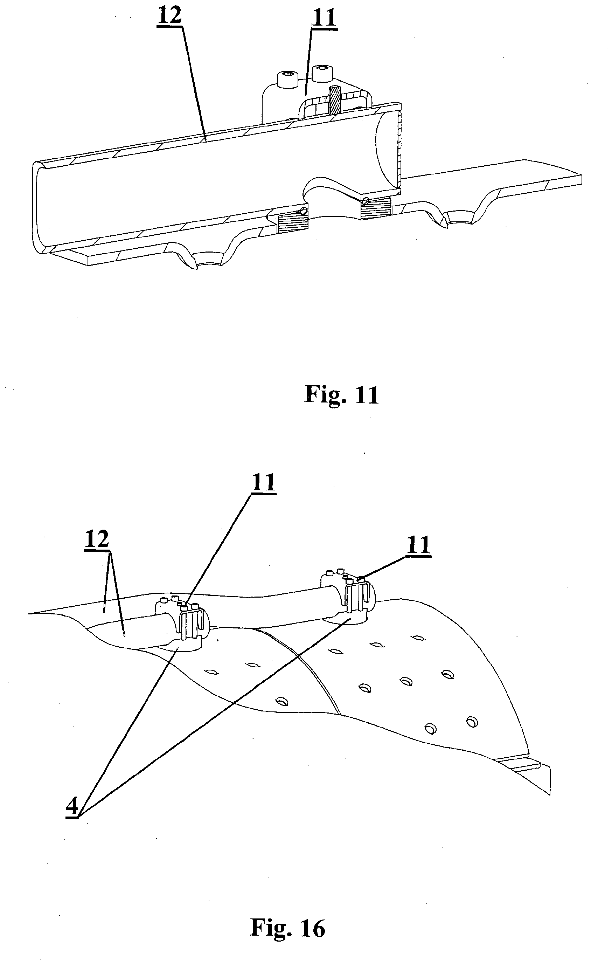

The bi-modular heat exchanger as illustrated on Fig. 12, consists of two modules 1 according to the invention, as shown on Fig. 1 and Fig. 2, described in example one, connected to each other to form a row. Interconnected segment of the combustion chamber 2 form the common combustion chamber of the heat exchanger, where the segment of the combustion chamber 1 in one of the outermost modules is fitted with a wall with an opening 14 to accommodate the burner, and the segment of the combustion chamber of the second outermost module is closed with a wall 15. The chamber for the flow of the water inside the sets 5 of the heat exchange elements is connected to the water jacket 3 of the segment of the combustion chamber. The tubes 13 which supply the water to the modules 1 are connected to the main inlet stub pipe, and the tubes 12 which collect the water from the modules 1 are connected to the main outlet stub pipe. The tubes for the supply 13 and collection 12 of the water to/from the modules are detachably connected to the corresponding inlet 6 and outlet 7 stub pipes with the linking element 11 featuring a collar for supporting the pipe(s) 16 to accommodate the tube (Fig. 16), which ensures swift assembly and disassembly of the tubes. The modules 1 of the heat exchanger have a common duct for the discharge of the combustion gases and another common duct for the discharge of the condensate.

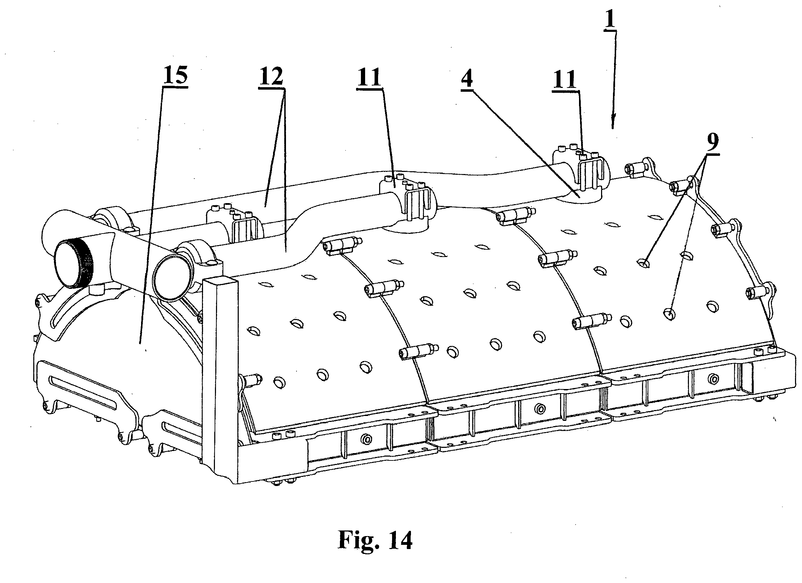

The tri-modular heat exchanger as shown on Figures 13 and 14, consists of three modules 1 according to the invention as depicted on Fig. 1 and Fig. 2 and described in example one, which are connected to each other, as in the bi-modular example.

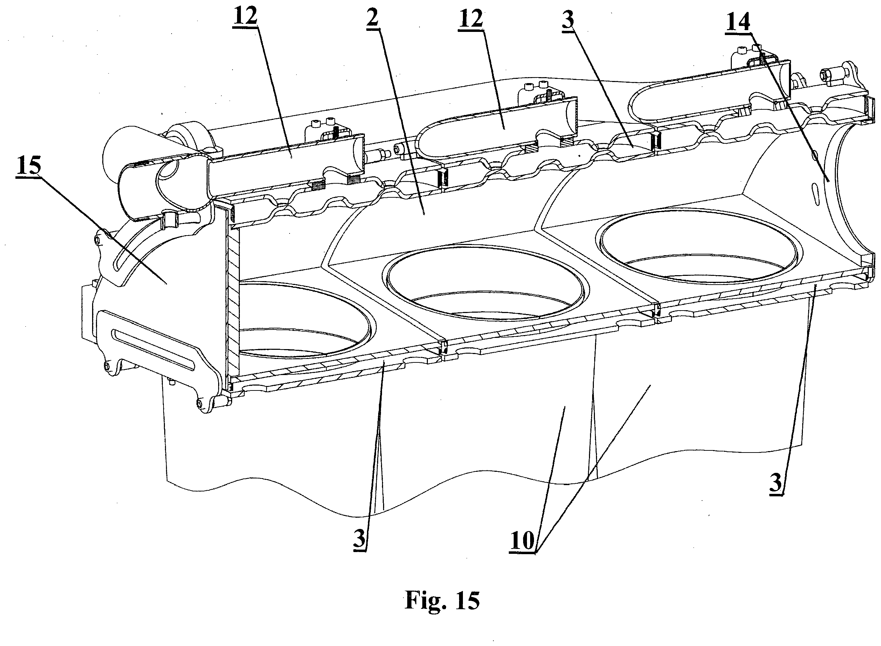

In other exemplary embodiments, the bi- or tri-modular heat exchanger consists of two or three modules 1, respectively, fitted with casing 10 for the sets 5 of the heat exchange elements, as shown on Fig. 3 and Fig. 4 and described in example two, where the modules are connected to each other as in bi-modular example illustrated on Fig. 15.

In yet other exemplary embodiments, the modular heat exchanger may be made of modules 1, as shown on Fig. 7 and Fig. 8 and described in the third exemplary embodiment, where the modules are connected to each other as in the bi-modular example.

In other embodiments of the invention the modular heat exchanger may consist of any number of modules arranged in different configurations adjusted to the desired dimensions of the heat exchanger and its desired efficiency.

## Claims

1. A module of a fired heat exchanger, which contains at least one set of heat exchange elements, at least one water inlet stub pipe (6), and at least one water outlet stub pipe (4), and at its top there is a segment of the combustion chamber (2) encased in a segment of the water jacket (3) fitted with at least one fluid outlet stub pipe (4), where connected to a bottom of the segment of the combustion chamber (2) is at least one set (5) of elements for the exchange of heat between the combustion gases and the water, fitted at the bottom with at least one water inlet stub pipe (6), where the chamber-through which the water flows in each set (5) of the heat exchange elements is connected to the segment of the water jacket (3), and the segment of the combustion chamber (2) is in the shape of a cylindrical dome featuring openings for said set(s) (5) in the bottom, **characterised in that** the segment of the water jacket (3) bottom of the segment of the combustion chamber (2) is made up of planes (7,8) where two upper planes (7) forming the bottom of the segment of the combustion chamber are positioned at an angle to each other and inclined down towards the centre of the lower plane (8) of said segment of the water jacket (3).

2. The module according to Claim 1, **characterised in that** the segment of the water jacket (3) is closed with a wall at least on one side of the segment of the combustion chamber (2).

3. The module according to Claim 1, **characterised in that** the connection between the segment of the combustion chamber (2) and the set(s) (5) is detachable.

4. The module according to Claims 1 to 3, **characterised in that** the segment of the water jacket (3) of the segment of the combustion chamber (2) features hollow-like indentations (9).

5. The module according to Claims 1 to 4, **characterized in that** it features a casing (10) for the set(s) with an opening (openings) for inserting the sct(s) inside, where the casing is connected to the wall of the segment of the water jacket of the segment of the combustion chamber (2).

6. The module according to Claim 5, **characterised in that** the casing (10) is integrally connected to the wall of the segment of the water jacket (3) of the segment of the combustion chamber (2).

7. The module according to Claim 1, **characterised in that** the tubes which supply (13) and collect (12) the water to/from the module are detachably connected to the relevant inlet (6) and outlet (4) stub pipes with a linking element (11) featuring a moulded collar (16) for supporting the tube(s) (12, 13).

8. The module according to Claims 1 to 7, **characterised in that** it serves as a heat exchanger, where the segment of the combustion chamber (2) and the segment of the water jacket (3) are closed with a wall on the one side, and a wall with an opening for the burner on the other side, in which way a combustion chamber is formed; the module further fitted with a duct discharging the combustion gases into a vent, and with a condensate accumulation bowl.

## Patentansprüche

1. Ein Modul des Heizkessels, das mindestens ein Paket von Wärmetauschelementen, mindestens einen Wassereinlauf- (6) und mindestens einen Wasserauslaufstutzen (4), sowie einen oben am Modul platzierten Segment mit der Verbrennungskammer (2) umfasst, der von einem Segment des Wassermantels (3) umbaut ist, der mit mindestens einem Auslaufstutzen (4) der Flüssigkeit versehen ist, wobei mindestens ein Paket (5) der Wärmetauschelemente zwischen den Abgasen und Wasser mit dem Boden des Segments der Verbrennungskammer (2) verbunden ist, wobei der Segment unten mit mindestens einem Einlaufstutzen für Wasser (6) versehen ist, wobei die Wasserkammer jedes einzelnen Pakets (5) der Wärmetauschelemente mit dem Segment des Wassermantels (3) verbunden ist, wobei der Segment der Verbrennungskammer (2) eine Form einer zylindrischen Kuppel mit Öffnungen im Boden für das genannte Paket (die genannten Pakete) aufweist, **dadurch gekennzeichnet, dass** der Segment des Wassermantels (3) am Boden des Segments der Verbrennungskammer (2) aus zwei Oberflächen (7, 8) besteht, wobei die zwei oberen Oberflächen (7), die den Boden des Segments der Verbrennungskammer bilden, zueinander unter einem Winkel, mit Gefälle in die Richtung der Mitte der unteren Oberfläche (8) des genannten Segments des Wassermantels (3) angeordnet sind.

2. Ein Modul nach Anspruch 1 **dadurch gekennzeichnet, dass** der Segment des Wassermantels (3) mit einer Wand von mindestens einer Seite des Segments der Verbrennungskammer (2) verschlossen ist.

3. Ein Modul nach Anspruch 1 **dadurch gekennzeichnet, dass** die Verbindung zwischen dem Segment der Verbrennungskammer (2) und dem Paket (den Paketen) (5) getrennt werden kann.

4. Ein Modul nach Ansprüchen 1 bis 3, **dadurch gekennzeichnet, dass** ein Segment des Wassermantels (3) eines Segments der Verbrennungskammer (2) Prägungen (9) aufweist.

5. Ein Modul nach Ansprüchen 1 bis 4, **dadurch gekennzeichnet, dass** es ein Gehäuse (10) für Paket/Pakete hat, das mit einer Öffnung/Öffnungen zum Einführen von Paket/ Paketen in das Innere versehen ist, wobei das Gehäuse mit der Wand des Wassermantelsegments des Verbrennungskammersegments (2) verbunden ist.

6. Ein Modul nach Anspruch 5, **dadurch gekennzeichnet, dass** das Gehäuse (10) mit der Wand des Wassermantelsegments (3) des Verbrennungskammersegments (2) integral verbunden ist.

7. Ein Modul nach Anspruch 1, **dadurch gekennzeichnet, dass** die Zuleitungen (13) und Ableitungen (12) für Wasser in das/ aus dem Modul an einen entsprechenden Einlauf- (6) und Auslaufstutzen (4) über einen Verbinder (11) mit einer Nische (16) zur Abstützung der Rohrleitung/-en (12, 13) trennbar angeschlossen sind.

8. Ein Modul nach Ansprüchen 1 bis 7, **dadurch gekennzeichnet, dass** es als ein Wärmetauscher funktioniert, wobei das Verbrennungskammersegment (2) und das Wassermantelsegment (3) einerseits mit einer Wand verschlossen sind, andererseits mit einer Wand mit einer Öffnung für den Brenner und so bilden sie eine Verbrennungskammer, darüber hinaus ist das Modul mit einem Rauchgaskanal ausgestattet, mit dem die Rauchgase in den Schornstein geleitet werden, sowie mit einem Kondensatbehälter.

## Revendications

1. Module du chaudière, contenant au moins un ensemble d'éléments d'échange de chaleur, au moins un tube d'entrée (6), et au moins un tube de sortie (4) d'eau, et un segment de chambre de combustion (2) situé en haut du module entouré par un segment d'enveloppe d'eau (3) équipé d'au moins un tube de sortie (4) de liquide, au moins ledit ensemble (5) d'éléments d'échange de chaleur entre les fumées et l'eau étant connecté au fond du segment de chambre de combustion (2) équipé d'au moins un tube d'entrée (6) au fond, ladite chambre d'écoulement d'eau de chaque ensemble (5) d'éléments d'échange de chaleur étant reliée au segment d'enveloppe d'eau (3), ledit segment de chambre de combustion (2) ayant la forme d'un dôme cylindrique avec des trous dans le fond pour ledit ensemble (lesdits ensembles), **caractérisé en ce que** le segment d'enveloppe d'eau (3) du fond du segment de chambre de combustion (2) est constitué de deux surfaces (7, 8), lesdits deux surfaces supérieures (7) formant le fond du segment de chambre de combustion sont disposées à un angle l'une avec l'autre inclinées vers le centre de la surface inférieure (8) dudit segment d'enveloppe d'eau (3).

2. Module selon la revendication 1, **caractérisé en ce que** le segment d'enveloppe d'eau (3) est fermé par une paroi sur au moins un côté du segment de chambre de combustion (2).

3. Module selon la revendication 1, **caractérisé en ce que** la connexion entre le segment de chambre de combustion (2) et le ou les ensembles (5) est amovible.

4. Module selon les revendications 1 à 3, **caractérisé en ce que** le segment d'enveloppe d'eau (3) du segment de la chambre de combustion (2) présente des reliefs (9).

5. Module selon la revendication 1 à 4, **caractérisé en ce qu'**il présente un boîtier (10) pour le ou les paquets, pourvu d'une ou de plusieurs ouvertures pour introduire le ou les paquets dans son intérieur, le boîtier étant relié à la paroi du segment d'enveloppe d'eau du segment de chambre de combustion (2).

6. Module selon la revendication 5, **caractérisé en ce que** le boîtier (10) avec la paroi du segment d'enveloppe d'eau (3) du segment de chambre de combustion (2) est intégralement connecté.

7. Module selon la revendication 1, **caractérisé en ce que** les tuyaux d'alimentation (13) en eau et d'évacuation (12) d'eau vers/depuis le module sont connectés de manière amovible aux tubes d'entrée (6) et de sortie (4) respectifs à travers un élément de raccordement (11) comprenant un évidement profilé (16) pour supporter le ou les tuyaux (12, 13).

8. Module selon la revendication 1 à 7, **caractérisé en ce qu'**il agit comme un échangeur de chaleur, le segment de chambre de combustion (2) et le segment d'enveloppe d'eau (3) étant fermés d'un côté par une paroi, et de l'autre côté par une paroi avec un trou pour le brûleur formant une chambre de combustion, en outre, le module est équipé d'un conduit d'évacuation des fumées et d'un bac de récupération des condensats.
